(19) **Europäisches Patentamt / European Patent Office / Office européen des brevets**

(11) **EP 4 782 826 A1**

(12) # EUROPEAN PATENT APPLICATION
published in accordance with Art. 153(4) EPC

(43) Date of publication:
**29.07.2026 Bulletin 2026/31**

(21) Application number: **24868292.4**

(22) Date of filing: **18.09.2024**

(51) International Patent Classification (IPC):
**G01N 27/62** (2021.01)

(52) Cooperative Patent Classification (CPC):
**G01N 27/62; Y02E 60/36**

(86) International application number:
**PCT/JP2024/033350**

(87) International publication number:
**WO 2025/063215 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.09.2023 JP 2023150748**

(71) Applicant: **IHI Corporation**
**Tokyo 135-8710 (JP)**

(72) Inventors:
• **MUROFUSHI, Shoko**
**Tokyo 135-8710 (JP)**
• **NAKAI, Shinnosuke**
**Tokyo 135-8710 (JP)**
• **TAKAHASHI, Katsumi**
**Tokyo 135-8710 (JP)**
• **FUJIMORI, Toshiro**
**Tokyo 135-8710 (JP)**

(74) Representative: **TBK**
**Bavariaring 4-6**
**80336 München (DE)**

(54) **METHOD FOR DETERMINING MANUFACTURING PROCESS OF MOLECULE TO BE DETERMINED**

(57) A manufacturing process determination method for a determination target molecule includes obtaining an isotope ratio $\delta D$ of deuterium to protium contained in the determination target molecule; and determining that the determination target molecule is a molecule produced using a method including electrolyzing for generating hydrogen molecules by electrolysis of a liquid containing water when the isotope ratio $\delta D$ is less than or equal to a predetermined threshold value.

FIG. 2

EP 4 782 826 A1

**Description**

TECHNICAL FIELD

This disclosure relates to a manufacturing process determination method for a determination target molecule.

BACKGROUND ART

Carbon dioxide is regarded as a cause of global warming, and movements to control carbon dioxide emissions have become active worldwide. Meanwhile, hydrogen that only generates water and does not generate carbon dioxide is attracting attention as a clean next-generation energy. As a method of generating hydrogen, an alkaline water electrolysis device disclosed in Patent Literature 1 is known.

CITATION LIST

PATENT LITERATURE

Patent Literature 1: WO 2019/181662

SUMMARY OF THE INVENTION

TECHNICAL PROBLEM

Hydrogen may be classified into gray hydrogen, blue hydrogen, green hydrogen, or the like, depending on the production method. Gray hydrogen is hydrogen generated from fossil fuels. Blue hydrogen is hydrogen generated by recovering and storing or reusing carbon dioxide generated in the generation process of gray hydrogen without releasing carbon dioxide into the atmosphere. Green hydrogen is hydrogen produced by electrolysis of a liquid containing water. However, a method of determining whether determination target hydrogen molecule is a molecule produced using a method including an electrolysis step is not known.

Therefore, an object of the present disclosure is to provide a manufacturing process determination method for determining whether a determination target molecule is a molecule produced using a method including an electrolysis step, or a molecule produced from a fossil fuel as a raw material.

SOLUTION TO PROBLEM

A manufacturing process determination method for a determination target molecule according to the present disclosure includes obtaining an isotope ratio $\delta D$ of deuterium to protium contained in the determination target molecule; and determining that the determination target molecule is a molecule produced using a method including electrolyzing for generating hydrogen molecules by electrolysis of a liquid containing water when the isotope ratio $\delta D$ is less than or equal to a predetermined threshold value.

The manufacturing process determination method for a determination target molecule according to the present disclosure includes obtaining an isotope ratio $\delta D$ of deuterium to protium contained in the determination target molecule; and determining that the determination target molecule is a molecule produced from a fossil fuel as a raw material when the isotope ratio $\delta D$ is greater than a predetermined threshold value.

The determination target molecule may be determined to be a molecule produced using a method including electrolyzing for generating hydrogen molecules by electrolysis of a liquid containing water when the isotope ratio $\delta D$ is less than or equal to the predetermined threshold value. The determination target molecule may be determined to be a molecule produced from a fossil fuel as a raw material when the isotope ratio $\delta D$ is greater than the predetermined threshold value.

The determination target molecule may be hydrogen, ammonia, or hydrocarbon.

The electrolysis may be at least either anion exchange membrane water electrolysis or proton exchange membrane water electrolysis.

The predetermined threshold value may be a value determined based on a first fitting curve obtained by preparing a first histogram having a class of the isotope ratio $\delta D$ of the determination target molecule produced using a method including electrolyzing for generating hydrogen molecules by electrolysis of a liquid containing water for a plurality of conditions, and by performing fitting to the first histogram.

The predetermined threshold value may be a value determined based on a second fitting curve obtained by preparing a second histogram having a class of the isotope ratio $\delta D$ of the determination target molecule produced from a fossil fuel as a raw material for a plurality of conditions, and by performing fitting to the second histogram.

The predetermined threshold value may be at an intersection point between the first fitting curve and the second fitting curve. The first fitting curve is obtained by preparing a first histogram having a class of the isotope ratio $\delta D$ of a determination target molecule that is produced using a method including electrolyzing for generating hydrogen molecules by electrolysis of a liquid containing water for a plurality of conditions, and by performing fitting to the first histogram. The second fitting curve is obtained by preparing a second histogram having a class of the isotope ratio $\delta D$ of a determination target molecule produced from a fossil fuel as a raw material for a plurality of conditions, and by performing fitting to the second histogram.

ADVANTAGEOUS EFFECTS OF INVENTION

According to the present disclosure, it is possible to provide a manufacturing process determination method for determining whether a determination target molecule is a molecule produced using a method including an electrolysis step or a molecule produced from a fossil fuel as a raw material.

BRIEF DESCRIPTION OF DRAWINGS

[FIG. 1] FIG. 1 is a histogram having a class of $\delta D$ of hydrogen gas produced by different methods.
[FIG. 2] FIG. 2 is a diagram in which a fitting curve is added to the histogram in FIG. 1.

DESCRIPTION OF EMBODIMENTS

Hereinafter, several exemplary embodiments will be described with reference to the drawings. Note that the dimensional ratios in the drawings are exaggerated for convenience of explanation, and may be different from the actual ratios.

The manufacturing process determination method for a determination target molecule according to the present embodiment includes an isotope ratio obtaining step and a determination step.

The isotope ratio obtaining step is a step of obtaining the isotope ratio $\delta D$ of hydrogen contained in the determination target molecule. The determination target molecule is a hydrogen-containing molecule containing hydrogen as an element, and may be a liquid, a solid, or a gas. As will be described below, the determination target molecule is not particularly limited as long as the determination target molecule is a molecule containing hydrogen as an element, and may be a hydrogen molecule or a hydrogen-containing compound. The hydrogen-containing compound may be, for example, ammonia or hydrocarbon. That is, the determination target molecule may be hydrogen, ammonia, or hydrocarbon. The determination method is based on the hydrogen isotope ratio $\delta D$, and can be used not only when the determination target molecule is hydrogen, but also when the determination target molecule is a hydrogen-containing compound, for example.

The amount of isotope change in natural substances is usually very small, and is expressed in ‰ as the value $\delta D$ relative to Vienna Standard Mean Ocean Water (VSMOW). In other words, the hydrogen isotope ratio $\delta D$ indicates how much the molar ratio of deuterium to protium contained in the determination target molecule changes relative to the molar ratio of deuterium to protium contained in the reference VSMOW. The hydrogen isotope ratio $\delta D$ of a determination target molecule is defined by the following mathematical formula (1):
[Mathematical 1]

$$\delta D = \frac{(D/H)_{\text{target}}}{(D/H)_{\text{VSMOW}}} - 1 \qquad (1)$$

In the mathematical formula (1) above, $\delta D$ is the isotope ratio of deuterium to protium contained in the determination target molecule, $(D/H)_{\text{target}}$ is the molar ratio of deuterium to protium contained in the determination target molecule, and $(D/H)_{\text{VSMOW}}$ is the molar ratio of deuterium to protium contained in the VSMOW. $(D/H)_{\text{VSMOW}}$ is 155.76 ± 0.1 ppm.

It is known that there are three isotopes of hydrogen in nature: protium ($^1H$ or H), deuterium ($^2H$ or D), and tritium ($^3H$ or T). Protium is the most abundant isotope of hydrogen element in nature. Deuterium is a stable isotope of hydrogen element. Tritium is a radioactive isotope, and its amount in nature is negligible. There are several electrolysis methods for water. Regardless of the electrolysis method, the amount of deuterium gas such as HD gas and $D_2$ gas produced is smaller than the amount of protium gas produced due to the isotope effect. Therefore, the isotope ratio $\delta D$ of hydrogen molecules produced by electrolysis is smaller than the isotope ratio $\delta D$ of water used as a raw material for electrolysis.

The molar ratio of deuterium to protium (D/H) can be obtained by calculating the molar ratio of deuterium to protium contained in the determination target molecule. The molar ratio of deuterium to protium (D/H) can be obtained using a mass spectrometer. The molar ratio (D/H) of deuterium to protium may be obtained by using a mass spectrometer combined with a separation device such as a gas chromatograph.

The determination step may be a step of determining that a determination target molecule is a molecule produced using a method including an electrolysis step when the obtained isotope ratio $\delta D$ is less than or equal to a predetermined threshold value. Specifically, the electrolysis step is a step of generating hydrogen molecules by electrolysis. The liquid to be electrolyzed may be any liquid containing water. Hydrogen can be generated by electrolyzing a liquid containing water. Specifically, the liquid containing water may be an aqueous solution containing an electrolyte. The aqueous solution may be hydrochloric acid, an aqueous solution of sodium chloride, an aqueous solution of alkali, or the like. The aqueous solution of alkali may contain an aqueous solution of an alkali metal hydroxide. The alkali metal hydroxide may contain, for example, at least one of sodium hydroxide or potassium hydroxide. In the present specification, electrolysis of a liquid containing water is also referred to as water electrolysis.

Examples of electrolysis may include proton exchange membrane (PEM) water electrolysis, alkali water electrolysis, anion exchange membrane (AEM) water electrolysis, solid oxide electrolysis cell (SOEC) water electrolysis, protonic ceramic electrolysis cell (PCEC) water electrolysis, or a combination thereof. More specifically, electrolysis may be at least one of anion exchange membrane water electrolysis or proton exchange membrane water electrolysis.

The predetermined threshold value may be a value determined based on a first fitting curve obtained by preparing a first histogram having a class of an isotope ratio $\delta D$ of a determination target molecule that is produced using a method including an electrolysis step for a plurality of conditions, and by performing fitting to the first histogram. The predetermined threshold value may be a value determined based on a second fitting curve obtained by preparing a second histogram having a class of an isotope ratio $\delta D$ of a determination target molecule produced from a fossil fuel as a raw material for a plurality of conditions, and by performing fitting to the second histogram. The predetermined threshold value may be an intersection point between the first fitting curve and the second fitting curve.

The predetermined threshold value in the determination step may be a value of - 375‰ or less. When the predetermined threshold value is -375‰ or less, it can be more clearly determined that the determination target molecule is a molecule produced using a method including an electrolysis step. The predetermined threshold value may be a value of -436.1‰ or less, a value of -448.2‰ or less, or a value of -510.1 or less. The predetermined threshold value may be a value of 0‰ or more, a value of -903.5‰ or more, or a value of - 721.3‰ or more.

In the determination step, when the isotope ratio $\delta D$ is greater than the predetermined threshold value, it may be determined that the determination target molecule is a molecule produced from a fossil fuel as a raw material. Thus, it can be determined that the determination target molecule is a molecule produced from a fossil fuel as a raw material.

In the determination step, when the obtained isotope ratio $\delta D$ is less than or equal to the predetermined threshold value, it may be determined that the determination target molecule is a molecule produced using a method including an electrolysis step. When the obtained isotope ratio $\delta D$ is greater than the predetermined threshold value, it may be determined that the determination target molecule is a molecule produced from a fossil fuel as a raw material. Thus, determination of molecules is possible not only when the determination target molecule is a molecule produced using a method including an electrolysis step, but also when the determination target molecule is a molecule produced from a fossil fuel as a raw material.

For example, if the determination target molecule is a hydrogen molecule, and the hydrogen molecule is determined to be a molecule produced by a method including an electrolytic step, the hydrogen molecule can be assumed to be hydrogen produced using renewable energy. When liquid is electrolyzed by electricity generated from fossil fuels, the cost is high and the process is not feasible when Gibbs free energy $\Delta G$ is considered, so the hydrogen may be green hydrogen. Although the production cost of green hydrogen is high, green hydrogen can contribute to the reduction of carbon dioxide because it generate no carbon dioxide in the hydrogen production process, not just during the combustion of hydrogen.

When the determination target molecule is a hydrogen molecule and the hydrogen molecule is determined to be hydrogen produced from fossil fuels as a raw material, it can be assumed that the determination target molecule is gray hydrogen or blue hydrogen produced from fossil fuels using a steam reforming method, a thermal decomposition method, a partial oxidation method, or the like, for example. Although the production cost of hydrogen is low, such hydrogen is not preferable from the viewpoint of carbon dioxide emission due to carbon dioxide emitted in the hydrogen production process. The fossil fuel may contain, for example, at least one selected from the group consisting of coal, oil, and natural gas.

The determination target molecule may be hydrogen, ammonia, or a hydrocarbon. Compounds such as ammonia and hydrocarbons can be produced from hydrogen molecules produced by electrolysis. Ammonia can be produced by, for example, a Haber-Bosch method using hydrogen molecules as a raw material. The hydrocarbon may contain at least one of methane or olefin. The methane can be produced by a methanation reaction using hydrogen molecules as a raw material. Olefin (alkene) can be produced by a Fischer-Tropsch reaction using hydrogen molecules as a raw material. The determination method in which the isotope ratio $\delta D$ of hydrogen is used is not limited to the case where the determination target molecule is hydrogen, but can also be used in the case where the determination target molecule is a hydrogen-containing compound such as ammonia or hydrocarbon produced as described above.

In the determination step, determination may be performed by a determination unit. The determination unit may be, for example, a computer including a central processing unit (CPU), a memory, an input unit, and an output unit. The CPU reads a determination program stored in a memory, and can determine whether the determination target molecule is a molecule produced using a method including an electrolysis step, or a molecule produced from a fossil fuel as a raw material, based on the obtained isotope ratio $\delta D$ and a threshold value. Specifically, in the determination step, the determination unit may determine that the determination target molecule is a molecule produced using a method including an electrolysis step when the isotope ratio $\delta D$ input to the input unit is less than or equal to a predetermined threshold value. In the determination step, when the obtained isotope ratio $\delta D$ is greater than a predetermined threshold value, the determination unit may determine that the determination target molecule is hydrogen produced from a fossil fuel as a raw material. The result determined by the determination unit may be output to an output unit such as a monitor.

As described above, the manufacturing process determination method for a determination target molecule according to the present embodiment includes the step of obtaining the isotope ratio $\delta D$ of deuterium to protium contained in the determination target molecule. The determination method includes the step of determining that the determination target molecule is a molecule produced using a method including an electrolysis step for producing hydrogen molecules by electrolysis of a liquid containing water when the isotope ratio $\delta D$ is less than or equal to a predetermined threshold value.

The manufacturing process determination method for a determination target molecule according to the present embodiment includes the step of obtaining the isotope ratio $\delta D$ of deuterium to protium contained in the determination target molecule, and the step of determining that the determination target molecule is a molecule produced from a fossil fuel as a raw material when the isotope ratio $\delta D$ is greater than a predetermined threshold value.

Hydrogen produced by electrolysis has a smaller isotope ratio $\delta D$ due to an isotope effect. However, hydrogen produced by steam reforming of a fossil fuel, for example, has a smaller isotope effect, and does not have a large difference from the isotope ratio $\delta D$ in nature as compared with the case of electrolysis. Therefore, in the manufacturing process determination method according to the present embodiment, when the isotope ratio $\delta D$ of hydrogen contained in the determination target molecule is less than or equal to a predetermined threshold value, it is determined that the hydrogen contained in the determination target molecule is derived from hydrogen produced by electrolysis of a liquid containing water. Therefore, according to the manufacturing process determination method according to the present embodiment, it is possible to determine whether the determination target molecule is a molecule produced using a method including an electrolysis step. Alternatively, in the manufacturing process determination method according to the present embodiment, when the isotope ratio $\delta D$ of hydrogen contained in the determination target molecule is larger than a predetermined threshold value, it is determined that the hydrogen contained in the determination target molecule is a molecule derived from hydrogen produced by fossil fuel. Therefore, with the manufacturing process determination method according to the present embodiment, it is possible to determine that the determination target molecule is a molecule produced from a fossil fuel as a raw material. As described above, with the manufacturing process determination method according to the present embodiment, it is possible to respond to evaluation needs related to environmental load.

Furthermore, according to the manufacturing process determination method according to the present embodiment, it is possible to determine whether the hydrogen contained in the determination target molecule is hydrogen derived from a manufacturing process involving generation of carbon dioxide. Therefore, for example, it is possible to ensure that hydrogen provided to the market is derived from hydrogen generated by electrolysis, not from hydrogen derived from fossil fuel. Further, hydrogen containing compounds such as ammonia and hydrocarbons can be generated using hydrogen as a raw material. Therefore, according to the present determination method, it is possible to ensure that not only hydrogen but also hydrogen containing compounds such as ammonia or hydrocarbons are derived from hydrogen generated by electrolysis, not from hydrogen derived from fossil fuel.

EXAMPLES

Hereinafter, the present embodiment will be described in more detail, but the present embodiment is not limited to these examples.

The isotope ratio $\delta D_{gas}$ of hydrogen gas produced by electrolysis of water, and the isotope ratio $\delta D_{gas}$ of hydrogen gas produced by liquefied natural gas (LNG), were calculated. First, a procedure for determining the isotope ratio $\delta D_{gas}$ will be described.

The isotope separation coefficient $\alpha_g$ of hydrogen gas produced in electrolysis of water is defined by the following mathematical formula (2) (H. Sato et al. Int. Journal Hydrogen Energy, October 2021, Vol. 46, Issue 68, p. 33689-33695). [Mathematical 2]

$$\alpha_{\mathbf{g}} = \frac{(D/H)_{\mathbf{in}}}{(D/H)_{\mathbf{gas}}} \qquad (2)$$

In mathematical formula (2) above, $(D/H)_{in}$ represents a molar ratio of deuterium to protium contained in water to be electrolyzed, and $(D/H)_{gas}$ represents a molar ratio of deuterium to protium contained in a hydrogen gas produced by electrolysis.

Mathematical formula (2) can be transformed into the following mathematical formula (3):

[Mathematical 3]

$$(D/H)_{\mathbf{gas}} = \frac{(D/H)_{\mathbf{in}}}{\alpha_{\mathbf{g}}} \qquad (3)$$

The hydrogen isotope ratio $\delta D_{sample}$ of a sample is defined by mathematical formula (4) as well as mathematical formula (1):

[Mathematical 4]

$$\delta D_{\mathbf{sample}} = \frac{(D/H)_{\mathbf{sample}}}{(D/H)_{\mathbf{VSMOW}}} - 1 \qquad (4)$$

In mathematical formula (4), $\delta D_{sample}$ represents a hydrogen isotope ratio of a sample, $(D/H)_{sample}$ represents a molar ratio of deuterium to protium contained in a sample, and $(D/H)_{VSMOW}$ represents a molar ratio of deuterium to protium contained in VSMOW. When a measurement target sample is water to be electrolyzed, the molar ratio of deuterium to protium contained in the water to be electrolyzed can be expressed as mathematical formula (5) below.

[Mathematical 5]

$$(D/H)_{\mathbf{sample}} = (D/H)_{\mathbf{in}} \qquad (5)$$

By substituting mathematical formulas (4) and (5) into mathematical formula (3), the following mathematical formula (6) is derived.

[Mathematical 6]

$$(D/H)_{\mathbf{gas}} = \frac{\left(\delta D_{\mathbf{sample}} + 1\right)(D/H)_{\mathbf{VSMOW}}}{\alpha_{\mathbf{g}}} \qquad (6)$$

When the measurement target sample is hydrogen gas produced by electrolysis of water, and $\delta D_{gas}$ is the isotope ratio $\delta D$ of a measurement target hydrogen gas, mathematical formula (4) can be expressed as mathematical formula (7) below.

[Mathematical 7]

$$\delta D_{\mathbf{gas}} = \frac{(D/H)_{\mathbf{gas}}}{(D/H)_{\mathbf{VSMOW}}} - 1 \qquad (7)$$

From mathematical formula (7) above, $\delta D_{gas}$ can be derived by measuring the $(D/H)_{gas}$ of hydrogen gas.

Substituting mathematical formula (6) above for mathematical formula (7) above, mathematical formula (8) below can be derived.

[Mathematical 8]

$$\delta D_{gas} = \frac{\delta D_{sample} + 1}{\alpha_g} - 1 \qquad (8)$$

From mathematical formula (8), $\delta D_{gas}$ of hydrogen gas produced by water electrolysis can be calculated from $\delta D_{sample}$ of water to be electrolyzed and the isotope separation factor $\alpha_g$ depending on the electrolysis method.

Calculation of $\delta D_{gas}$ of Hydrogen Gas Produced by Water electrolysis

For the types of electrocatalysts, the hydrogen isotope ratio $\delta D_{gas}$ of hydrogen gas produced was calculated by substituting the isotope separation factor $\alpha_g$ of AEM and PEM reported for water electrolysis and the hydrogen isotope ratio $\delta D_{sample}$ of natural water in Japan into mathematical formula (8). The isotope separation factor $\alpha_g$ was referred to the following literature.

R. Ogawa et al. Energy, April 2018, Vol. 149, p. 98-104.
H. Sato et al. Int. Journal Hydrogen Energy, October 2021, Vol. 46, Issue 68, p. 33689-33695
Mizota C. and Kusakabe M. Geochemical Journal, 1994, Vol. 28, p. 387-410.

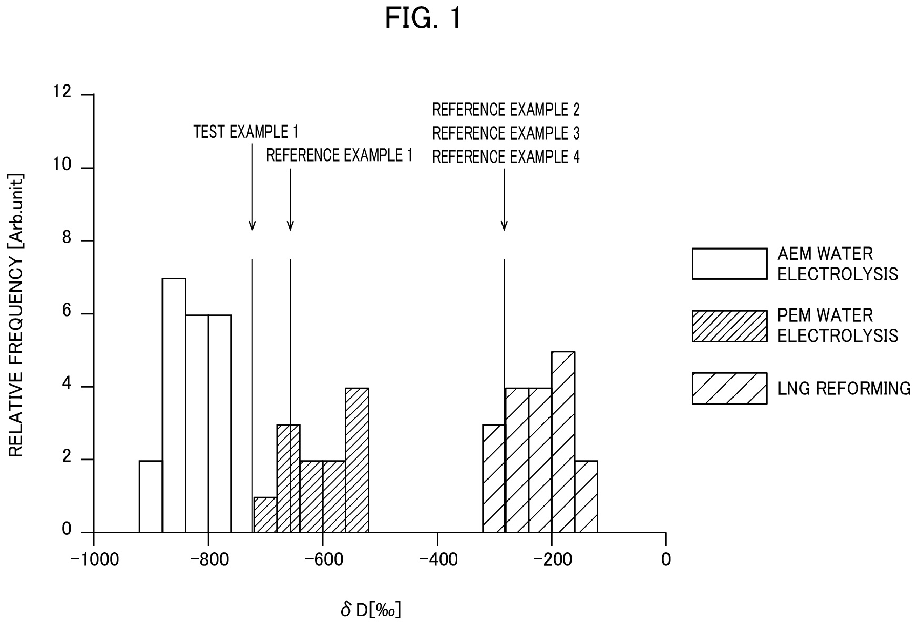

The results are shown in Tables 1 and 2. Based on the results, a histogram (first histogram) with a class of hydrogen isotope ratio $\delta D_{gas}$ was illustrated in FIG. 1.

[Table 1]

| Test Example | Hydrogen Production Method | Electrocatalyst | $\alpha_g$ | $\delta D_{sample}$ | $\delta D_{gas}$ |
|---|---|---|---|---|---|
| 1 | AEM | Pt | 4.34 | -20 | -774.02 |
| 2 | AEM | Pt | 4.34 | -55 | -782.09 |
| 3 | AEM | Pt | 4.34 | -90 | -790.16 |
| 4 | AEM | Pt | 4.63 | -20 | -788.50 |
| 5 | AEM | Pt | 4.63 | -55 | -796.06 |
| 6 | AEM | Pt | 4.63 | -90 | -803.61 |
| 7 | AEM | Pt | 4.77 | -20 | -794.65 |
| 8 | AEM | Pt | 4.77 | -55 | -801.98 |
| 9 | AEM | Pt | 4.77 | -90 | -809.32 |
| 10 | AEM | Pt | 4.95 | -20 | -802.04 |
| 11 | AEM | Pt | 4.95 | -55 | -809.11 |
| 12 | AEM | Pt | 4.95 | -90 | -816.18 |
| 13 | AEM | Pt | 6.90 | -20 | -857.97 |
| 14 | AEM | Pt | 6.90 | -55 | -863.04 |
| 15 | AEM | Pt | 6.90 | -90 | -868.12 |
| 16 | AEM | Ni | 7.20 | -20 | -863.89 |
| 17 | AEM | Ni | 7.20 | -55 | -868.75 |
| 18 | AEM | Ni | 7.20 | -90 | -873.61 |
| 19 | AEM | $NiCo_2O_4$ | 8.00 | -20 | -877.50 |
| 20 | AEM | $NiCo_2O_4$ | 8.00 | -55 | -881.88 |
| 21 | AEM | $NiCo_2O_4$ | 8.00 | -90 | -886.25 |

[Table 2]

| Test Example | Hydrogen Production Method | Electrocatalyst | $\alpha_g$ | $\delta D_{sample}$ | $\delta D_{gas}$ |
|---|---|---|---|---|---|
| 1 | PEM | Pt | 2.10 | -20 | -533.11 |
| 2 | PEM | Pt | 2.10 | -55 | -549.79 |
| 3 | PEM | Pt | 2.10 | -90 | -566.46 |
| 4 | PEM | Pt | 2.12 | -20 | -537.48 |
| 5 | PEM | Pt | 2.12 | -55 | -554.00 |
| 6 | PEM | Pt | 2.12 | -90 | -570.51 |
| 7 | PEM | Pt | 2.55 | -20 | -616.36 |
| 8 | PEM | Pt | 2.55 | -55 | -630.06 |
| 9 | PEM | Pt | 2.55 | -90 | -643.76 |
| 10 | PEM | Pt | 2.92 | -20 | -664.47 |
| 11 | PEM | Pt | 2.92 | -55 | -676.46 |
| 12 | PEM | Pt | 2.92 | -90 | -688.44 |

Calculation of $\delta D_{gas}$ of Hydrogen Gas Produced by Liquefied Natural Gas (LNG)

$\delta D_{gas}$ of hydrogen produced by steam reforming of methane contained in LNG was calculated. In steam reforming using methane as a raw material, reactions shown in the following chemical equations (1) to (3) occur.

$$CH_4 + H_2O \rightarrow CO + 3H_2 \qquad (1)$$

$$CH_4 + 2H_2O \rightarrow CO_2 + 4H_2 \qquad (2)$$

$$CO + H_2O \rightarrow CO_2 + H_2 \qquad (3)$$

Chemical equations (1) to (3) can be expressed as a single chemical equation in chemical equation (4) below.

$$CH_4 + 2H_2O \rightarrow CO_2 + 4H_2 \qquad (4)$$

When the hydrogen isotope ratio of water as a raw material is $\delta D_w$, the molar ratio of deuterium to protium contained in water (D/H) is a, and the molar ratio of deuterium to protium contained in VSMOW is $(D/H)_{VSMOW}$, mathematical formula (4) can be expressed as mathematical formula (9) below. Similarly, when the hydrogen isotope ratio of methane as a raw material is $\delta D_g$, the molar ratio of deuterium to protium contained in methane (D/H) is b, and the molar ratio of deuterium to protium contained in VSMOW is $(D/H)_{VSMOW}$, mathematical formula (4) can be expressed as mathematical formula (10) below. Then, the values of a and b can be obtained by substituting general $\delta D_W$ and $\delta D_g$ shown in Table 3 below into mathematical formulas (9) and (10).
[Mathematical 9]

$$a = (\delta D_w + 1) \cdot (D/H)_{VSMOW} \qquad (9)$$

[Mathematical 10]

$$b = \left(\delta D_g + 1\right) \cdot (D/H)_{VSMOW} \qquad (10)$$

Here, it has been reported that an isotope effect appears in the cleavage of carbon-hydrogen bonds, and that k/k' is 6.69 at 25°C and 3.31 at 200°C as the isotope effect of C-H bonds and C-D bonds (Junichi Matsuo, Chemistry and Education, 2013, vol. 61, p. 244-247). Here, k represents the rate of the reaction including the cleavage of C-H bonds, and k' represents the rate of the reaction including the cleavage of C-D bonds. The isotope effect decreases as the reaction temperature increases. When the reaction temperature is very high, the isotope effect does not appear, and k/k' becomes close to 1. The reaction temperature of steam reforming in general is estimated to be about 700°C, and the isotope effect around this temperature is estimated to be about 1.2 to 1.3. Therefore, the molar ratio of deuterium to protium contained in methane was calculated by taking the isotope effect above into account, and the value of b' expressed by the following mathematical formula (11) was used.

[Mathematical 11]

$$b' = b/\alpha_{C-H} \qquad (11)$$

Here, $\alpha_{C-H}$ represents the isotope effect in the steam reforming of methane. In this example, b' was calculated with $\alpha_{C-H} = 1.2$ or $\alpha_{C-H} = 1.3$.

As shown in chemical equation (4), a hydrogen product is produced from methane and water in equal amounts. In other words, hydrogen contained in methane and water is mixed in equal amounts to produce hydrogen gas. Therefore, if the molar ratio (D/H) of deuterium to protium in the hydrogen gas produced by the steam reforming reaction is c, c can be expressed as the following mathematical formula (12). Then, the value of c can be obtained by substituting the value of a obtained by mathematical formula (9) and the value of b obtained by mathematical formula (10) into mathematical formula (12).

[Mathematical 12]

$$c = \frac{a + b'}{1 - a + 1 - b'} \qquad (12)$$

Mathematical formula (13) can be derived by substituting c as $(D/H)_{gas}$ in mathematical formula (7) above. By substituting the value of c into mathematical formula (13), the value of hydrogen isotope ratio $\delta D_{gas}$ can be obtained.

[Mathematical formula 13]

$$\delta D_{gas} = \frac{c}{(D/H)_{VSMOW}} - 1 \qquad (13)$$

That is, $\delta D_{gas}$ can be calculated by substituting $\alpha_{C-H}$, $\delta D_g$, and $\delta D_W$ shown in Table 3 into mathematical formulas (9) to (13) (M.J. Whiticar, Chem. Geo. September 1999, Vol. 161, p. 291-314). The results calculated by this method are shown in Table 3. Furthermore, from these results, a histogram (second histogram) with a class of $\delta D_{gas}$ was generated in FIG. 1.

[Table 3]

| Test Example | Hydrogen Production Method | $\alpha_{C-H}$ | $\delta D_g$ | $\delta D_w$ | $\delta D_{gas}$ |
|---|---|---|---|---|---|
| 1 | Methane Reforming | 1.2 | -400 | -90 | -294.9 |
| 2 | Methane Reforming | 1.2 | -250 | -90 | -232.4 |
| 3 | Methane Reforming | 1.2 | -100 | -90 | -169.9 |
| 4 | Methane Reforming | 1.2 | -400 | -55 | -277.4 |
| 5 | Methane Reforming | 1.2 | -250 | -55 | -214.9 |
| 6 | Methane Reforming | 1.2 | -100 | -55 | -152.4 |
| 7 | Methane Reforming | 1.2 | -400 | -20 | -259.9 |
| 8 | Methane Reforming | 1.2 | -250 | -20 | -197.4 |
| 9 | Methane Reforming | 1.2 | -100 | -20 | -134.9 |
| 10 | Methane Reforming | 1.3 | -400 | -90 | -314.2 |
| 11 | Methane Reforming | 1.3 | -250 | -90 | -256.5 |
| 12 | Methane Reforming | 1.3 | -100 | -90 | -198.7 |
| 13 | Methane Reforming | 1.3 | -400 | -55 | -296.7 |

(continued)

| Test Example | Hydrogen Production Method | $\alpha_{C-H}$ | $\delta D_g$ | $\delta D_w$ | $\delta D_{gas}$ |
|---|---|---|---|---|---|
| 14 | Methane Reforming | 1.3 | -250 | -55 | -238.9 |
| 15 | Methane Reforming | 1.3 | -100 | -55 | -181.2 |
| 16 | Methane Reforming | 1.3 | -400 | -20 | -279.1 |
| 17 | Methane Reforming | 1.3 | -250 | -20 | -221.4 |
| 18 | Methane Reforming | 1.3 | -100 | -20 | -163.7 |

$\delta D$ of Reference Example

Next, the molar ratio of deuterium to protium in the hydrogen gas of Reference Examples 1 to 4 was measured using a stable isotope ratio mass spectrometer (DELTA V Advantage, manufactured by Thermo Fisher Scientific). The production methods are known as shown in Table 4 below. In the analysis of the molar ratio of deuterium to protium in the hydrogen gas, the gas to be analyzed was directly introduced into the mass spectrometer without any pretreatment. Helium gas was used as the flow gas. The molar ratio of deuterium to protium $(D/H)_{gas}$ was measured by a gas bench method. Then, $\delta D_{gas}$ was calculated by substituting the value into mathematical formula (7) above. The results are shown in Table 4 and FIG. 1.

[Table 4]

| Sample Name | Hydrogen Production Method | $(D/H)_{gas}$ | $\delta D_{gas}$ |
|---|---|---|---|
| Reference Example 1 | AEM | 53.6 | -655.6 |
| Reference Example 2 | LNG Reforming | 112.0 | -281.0 |
| Reference Example 3 | LNG Reforming | 111.9 | -281.4 |
| Reference Example 4 | LNG Reforming | 111.9 | -281.9 |

As shown in Tables 1 to 3 and FIG. 1, $\delta D_{gas}$ was different between hydrogen gas produced by AEM and PEM, and hydrogen gas produced by methane steam reforming, and it was confirmed that there was clearly a region in which $\delta D_{gas}$ did not overlap between the gasses. Hydrogen gas produced by AEM and PEM has a large isotope effect because hydrogen gas is produced by an electrocatalytic decomposition reaction. However, hydrogen gas produced by methane steam reforming has a low isotope effect due to high reaction temperature (700°C to 800°C). Therefore, it is considered that hydrogen produced by water electrolysis with a large isotope effect has a large absolute value of $\delta D_{gas}$, and that hydrogen produced by methane steam reforming with a small isotope effect has a small absolute value of $\delta D_{gas}$.

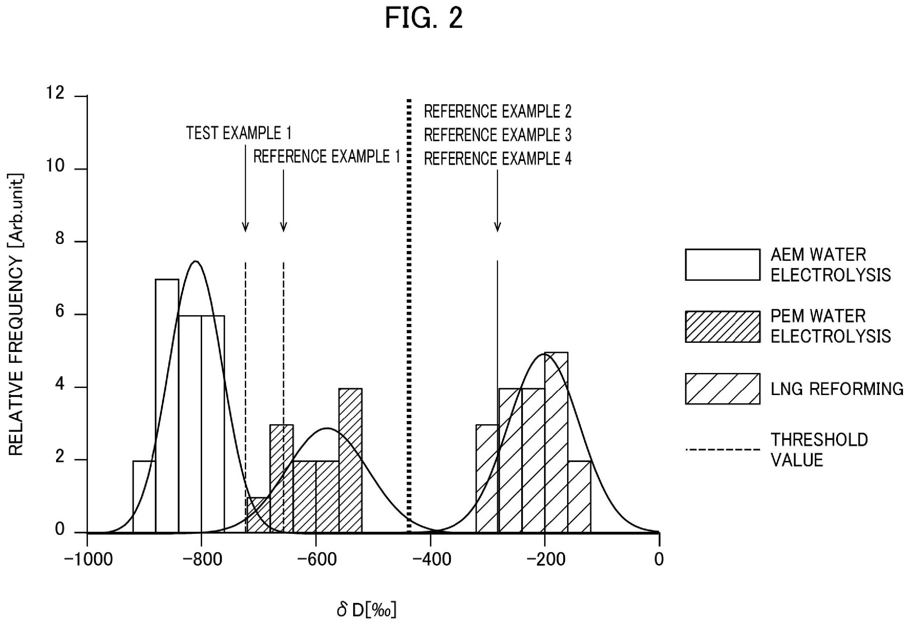

As shown in Table 4 and FIG. 1, the value of $\delta D_{gas}$ in Reference Example 1 was in the range of hydrogen gas produced by water electrolysis. The values of $\delta D_{gas}$ in Reference Examples 2 to 4 were in the range of hydrogen gas produced by methane steam reforming. From these results, it is possible to clearly distinguish hydrogen produced by water electrolysis from hydrogen produced by methane steam reforming. Specifically, a first fitting curve was prepared by fitting the first histogram of AEM water electrolysis. Similarly, a first fitting curve was prepared by fitting the first histogram of PEM water electrolysis. A second fitting curve was prepared by fitting the second histogram of LNG steam reforming. The fitting was performed by Gaussian fitting of the histogram based on the Gaussian function shown in mathematical formula (14). The results are shown in FIG. 2 and Table 5.

[Mathematical 14]

$$F(x) = \frac{1}{\sqrt{2\pi\sigma^2}}\exp\left(-\left(\frac{x-x_o}{\text{width}}\right)^2\right) = \frac{1}{\sqrt{2\pi\sigma^2}}\exp\left(-\left(\frac{x-x_o}{\sqrt{2}\sigma}\right)^2\right) \qquad (14)$$

In mathematical formula (14), $x_o$ represents the mean value of the hydrogen isotope ratio $\delta D$, and $\sigma$ represents the variance of the hydrogen isotope ratio $\delta D$.

[Table 5]

|  | Height | Average | Width | $\sigma$ |
|---|---|---|---|---|
| AEM Water Electrolysis | 7.53 | -808.5 | 67.2 | 47.5 |
| PEM Water Electrolysis | 2.89 | -578.7 | 100.8 | 71.3 |
| LNG Reforming | 4.97 | -200.4 | 87.6 | 61.9 |

From the results of FIG. 2 and Table 5, for example, a value ($\delta D_{gas}$ = -436.1‰) larger by $2\sigma$ (= $2 \times 71.3$) than the mean value ($\delta D_{gas}$ = -578.7‰) of the first fitting curve obtained with a normal distribution for PEM water electrolysis can be set as a threshold value for determination. From the results of FIG. 2, it can be determined that the hydrogen gas is derived from methane steam reforming when the hydrogen isotope ratio $\delta D_{gas}$ is larger than the threshold value, and that the hydrogen gas is generated by electrolysis when the hydrogen isotope ratio $\delta D_{gas}$ is smaller than the threshold value.

$\delta D$ of Test Example

Next, the $(D/H)_{gas}$ of the hydrogen gas in Test Example 1, in which the purity was specified but the hydrogen production method was unknown, was measured using the same method as described above, and $\delta D_{gas}$ was calculated.

[Table 6]

| Sample Name | Hydrogen production method | $(D/H)_{gas}$ | $\delta D_{gas}$ |
|---|---|---|---|
| Test Example 1 | Unknown | 43.3 | -722.1 |

As shown in Table 6 and FIG. 2, the isotope ratio $\delta D_{gas}$ of Test Example 1 was smaller than the threshold value, so it was determined that hydrogen gas was produced by electrolysis of water. From this result, it is understood that by obtaining the isotope ratio $\delta D$ of the hydrogen gas in which the production method was unknown, it was possible to determine whether the hydrogen gas was produced by electrolysis of water or from a fossil fuel such as LNG.

In this example, it was confirmed that hydrogen gas produced by electrolysis can be distinguished from hydrogen gas produced from fossil fuel by obtaining the isotope ratio $\delta D$ of hydrogen gas. However, this method can be applied not only to hydrogen gas but also to hydrogen-containing compounds that can be produced from hydrogen gas, such as ammonia gas, methane, olefins, and aircraft fuel.

In other words, when a hydrogen-containing compound is produced by reacting a hydrogen molecule with a molecule other than hydrogen, a specific process required for the reaction is industrially applied without depending on a method of producing hydrogen. Therefore, hydrogen from water electrolysis and hydrogen from methane steam reforming undergo the same process, the same isotope effect as that of hydrogen molecule is reflected in the hydrogen-containing compound produced. Therefore, the isotope ratio $\delta D$ of hydrogen contained in the hydrogen-containing compound is obtained by multiplying the isotope ratio $\delta D$ of hydrogen as a raw material by a parameter based on the isotope effect ratio for each process, so that the hydrogen isotope ratio $\delta D$ of the raw material is maintained. For example, in ammonia ($NH_3$) synthesized from hydrogen and nitrogen, the isotope ratio $\delta D$ of hydrogen as a raw material is maintained by the hydrogen isotope ratio $\delta D$ of ammonia, so that it is possible to distinguish ammonia derived from water electrolysis from ammonia derived from methane steam reforming, based on the hydrogen isotope ratio $\delta D$ of ammonia.

Therefore, the determination method described herein can be applied to hydrogen-containing molecules such as hydrogen, ammonia, or hydrocarbons.

Further, in this embodiment, a value determined based on a first fitting curve obtained by preparing a first histogram having a class of an isotope ratio $\delta D$ of hydrogen gas produced by PEM water electrolysis, and performing fitting to the first histogram, was used as a predetermined threshold value. Specifically, a value $2\sigma$ greater than the average value of the first fitting curve was set as a threshold value for determination.

However, the predetermined threshold value may be a value determined based on a second fitting curve obtained by preparing a second histogram having a class of an isotope ratio $\delta D$ of hydrogen gas produced by steam reforming using LNG as a raw material, and performing fitting to the second histogram. The upper limit value of the predetermined threshold value may be determined based on a value of variance $\sigma$ of the hydrogen isotope ratio $\delta D$. The upper limit value of the predetermined threshold value may be, for example, a value (-448.2‰) $4\sigma$ smaller than the average value of the second fitting curve, or a value (-510.1‰) $5\sigma$ smaller than the average value of the second fitting curve. The upper limit value of the predetermined threshold value may be an intersection point (-375‰) between the first fitting curve and the second fitting curve. The lower limit value of the predetermined threshold value may be a value determined based on the first fitting curve of the AEM water electrolysis as the predetermined threshold value. The lower limit value of the predetermined threshold value may be, for example, -1000‰, a value (-903.5‰) $2\sigma$ smaller than the average value of the first fitting curve of the AEM water electrolysis, or a value (-721.3‰) $2\sigma$ smaller than the average value of the first fitting curve of the PEM water electrolysis.

The entire contents of Japanese Patent Application 2023-150748, filed on September 19, 2023, are hereby incorporated by reference.

Several embodiments have been described. However, the embodiments may be modified or modified based on the disclosure above. All components of the above embodiments and all features described in the claims may be individually extracted, and or bay be combined as long as they do not conflict with each other.

This disclosure can contribute to, for example, Goal 7 "Ensure access to affordable, reliable, sustainable and modern energy for all", Goal 12 "Ensure sustainable consumption and production patterns", and Goal 13 "Take urgent action to combat climate change and its impacts" in the United Nations-led Sustainable Development Goals (SDGs).

**Claims**

1. A manufacturing process determination method for a determination target molecule comprising:

   obtaining an isotope ratio $\delta D$ of deuterium to protium contained in the determination target molecule; and determining that the determination target molecule is a molecule produced using a method including electrolyzing for generating hydrogen molecules by electrolysis of a liquid containing water when the isotope ratio $\delta D$ is less than or equal to a predetermined threshold value.

2. A manufacturing process determination method for a determination target molecule comprising:

   obtaining an isotope ratio $\delta D$ of deuterium to protium contained in a determination target molecule; and determining that the determination target molecule is a molecule produced from a fossil fuel as a raw material when the isotope ratio $\delta D$ is greater than a predetermined threshold value.

3. The manufacturing process determination method according to claim 1 or 2, wherein the determination target molecule is determined to be a molecule produced using a method including electrolyzing for generating hydrogen molecules by electrolysis of a liquid containing water when the isotope ratio $\delta D$ is less than or equal to the predetermined threshold value, and the determination target molecule is determined to be a molecule produced from a fossil fuel as a raw material when the isotope ratio $\delta D$ is greater than the predetermined threshold value.

4. The manufacturing process determination method according to any one of claims 1 to 3, wherein the determination target molecule is hydrogen, ammonia, or hydrocarbon.

5. The manufacturing process determination method according to claim 1 or 3, wherein the electrolysis is at least either anion exchange membrane water electrolysis or proton exchange membrane water electrolysis.

6. The manufacturing process determination method according to any one of claims 1 to 5, wherein the predetermined threshold value is a value determined based on a first fitting curve obtained by preparing a first histogram having a class of the isotope ratio $\delta D$ of the determination target molecule produced using a method including electrolyzing for generating hydrogen molecules by electrolysis of a liquid containing water for a plurality of conditions, and by performing fitting to the first histogram.

7. The manufacturing process determination method for a determination target molecule according to any one of claims 1 to 6, wherein the predetermined threshold value is a value determined based on a second fitting curve obtained by preparing a second histogram having a class of the isotope ratio $\delta D$ of the determination target molecule produced from a fossil fuel as a raw material for a plurality of conditions, and by performing fitting to the second histogram.

8. The manufacturing process determination method according to any one of claims 1 to 7, wherein

   the predetermined threshold value is at an intersection point between the first fitting curve and the second fitting curve,
   the first fitting curve is obtained by preparing a first histogram having a class of the isotope ratio $\delta D$ of the determination target molecule that is produced using a method including electrolyzing for generating hydrogen molecules by electrolysis of a liquid containing water for a plurality of conditions, and by performing fitting to the first histogram, and

the second fitting curve is obtained by preparing a second histogram having a class of the isotope ratio $\delta D$ of the determination target molecule produced from a fossil fuel as a raw material for a plurality of conditions, and by performing fitting to the second histogram.

# FIG. 1

EP 4 782 826 A1

FIG. 2

## INTERNATIONAL SEARCH REPORT

| International application No. |
| --- |
| **PCT/JP2024/033350** |

**A. CLASSIFICATION OF SUBJECT MATTER**

*G01N 27/62*(2021.01)i
FI:  G01N27/62 V

According to International Patent Classification (IPC) or to both national classification and IPC

**B. FIELDS SEARCHED**

Minimum documentation searched (classification system followed by classification symbols)

G01N27/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2019/181662 A1 (TOKUYAMA CORPORATION) 26 September 2019 (2019-09-26) | 1-8 |
| A | JP 2004-191271 A (SUGA TEST INSTRUMENTS CO., LTD.) 08 July 2004 (2004-07-08) | 1-8 |
| A | US 2023/0167720 A1 (TERRAH2 LLC.) 01 June 2023 (2023-06-01) | 1-8 |
| A | US 8101488 B1 (SMICK H., Theodore) 24 January 2012 (2012-01-24) | 1-8 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 December 2024** | **10 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

# EP 4 782 826 A1

| Patent document cited in search report | | | Publication date (day/month/year) | Patent family member(s) | | | Publication date (day/month/year) |
|---|---|---|---|---|---|---|---|
| WO | 2019/181662 | A1 | 26 September 2019 | US | 2021/0040631 | A1 | |
| | | | | EP | 3770304 | A1 | |
| | | | | CN | 111699279 | A | |
| | | | | KR | 10-2020-0133722 | A | |
| | | | | CA | 3093890 | A1 | |
| JP | 2004-191271 | A | 08 July 2004 | JP | 3457306 | B1 | |
| | | | | US | 2006/0076246 | A1 | |
| | | | | WO | 2004/055241 | A2 | |
| | | | | EP | 1570110 | A2 | |
| US | 2023/0167720 | A1 | 01 June 2023 | US | 2022/0251935 | A1 | |
| | | | | US | 2023/0077276 | A1 | |
| | | | | US | 2023/0160284 | A1 | |
| | | | | US | 2023/0167719 | A1 | |
| | | | | WO | 2022/170188 | A1 | |
| | | | | CA | 3174170 | A1 | |
| US | 8101488 | B1 | 24 January 2012 | (Family: none) | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019181662 A

- JP 2023150748 A

**Non-patent literature cited in the description**

- **H. SATO et al.** *Int. Journal Hydrogen Energy*, October 2021, vol. 46 (68), 33689-33695
- **R. OGAWA et al.** *Energy*, 2018, vol. 149, 98-104
- **MIZOTA C. ; KUSAKABE M.** *Geochemical Journal*, 1994, vol. 28, 387-410

- **JUNICHI MATSUO.** *Chemistry and Education*, 2013, vol. 61, 244-247
- **M.J. WHITICAR.** *Chem. Geo.*, September 1999, vol. 161, 291-314